# DEMANDE DE BREVET EUROPEEN

(11) **EP 4 527 651 A1**
(43) Date de publication de la demande: **26.03.2025**
(21) Numéro de dépôt: 24201540.2
(22) Date de dépôt: 20.09.2024
(51) Int. Cl.: B60J 5/12

(54) **CAISSE A PORTE ARRIERE AUTOMATIQUE POUR VEHICULE INDUSTRIEL**

(30) Priorité: 22.09.2023 FR 2310048
(71) Demandeur: BENALU, 62800 Lievin (FR)
(72) Inventeur: LABENDA, Fabrice, 62320 Rouvroy (FR)
(74) Mandataire: Matkowska, Franck

(57) **Abrégé**

La caisse (11) de véhicule industriel comportant une porte arrière comprenant un premier vantail (120a) qui comporte une position opérationnelle dans laquelle ledit premier vantail peut pivoter en rotation entre une position de fermeture de la caisse et une position ouverte dans laquelle il est orienté parallèlement à un plan longitudinal vertical (X,Z) de la caisse (11). Le premier vantail est mobile en translation jusqu'à une position rétractée à l'extérieur de la caisse et le long d'une première face latérale (11e) de la caisse (11). La caisse est équipée d'un système (13) d'ouverture/fermeture automatique qui comporte un premier actionneur adapté pour actionner le premier vantail en rotation entre ladite position de fermeture de la caisse et ladite position ouverte lorsque le premier vantail est dans ladite position opérationnelle, et un deuxième actionneur adapté pour déplacer le premier vantail en position ouverte, entre ladite position opérationnelle et ladite position rétractée.

## Description

### Domaine technique

L'invention concerne une caisse à porte arrière automatique pour véhicule industriel et un véhicule industriel comportant une telle caisse à porte arrière automatique.

### Art antérieur

Dans le présent texte, le terme « *véhicule industriel* » désigne indifféremment un camion-porteur, une remorque et une semi-remorque. Le terme « caisse » désigne indifféremment tout type de réceptacle ou conteneur destiné à être posé, notamment pour son transport, sur un châssis porteur roulant. La caisse peut être destinée à être montée en position fixe ou être montée basculante pour son bennage autour d'un axe soit parallèle, soit transversal, à l'axe longitudinal avant/arrière de la caisse. La caisse peut selon le cas être non-amovible ou être amovible par rapport au châssis porteur roulant, afin de pouvoir être déposée sur le sol. La caisse peut notamment être de type benne (basculante ou non basculante) ouverte sur le dessus pour son chargement gravitaire ou peut être un caisson fermé de type conteneur. La caisse peut indifféremment être utilisée pour transporter tout type de chargement.

Une caisse comprend de manière générale un fond (fixe ou mouvant), des parois latérales respectivement droite et gauche, une paroi avant et une paroi arrière, les qualificatifs avant, arrière, droite et gauche étant à comprendre par rapport au sens de la marche avant d'un véhicule sur lequel la caisse est installée.

Lorsque la caisse est un conteneur prévu notamment pour être chargé et déchargé par l'arrière, elle comporte une paroi supérieure. Lorsque la caisse est de type benne et est prévue pour être chargée par voie gravitaire, elle est ouverte en partie supérieure et peut dans ce cas être équipée d'une bâche de protection de son chargement, ladite bâche pouvant être amovible ou enroulable.

Lorsqu'elle est prévue pour être déchargée par l'arrière, la paroi arrière de la caisse comporte ou forme une porte arrière permettant d'ouvrir la caisse en partie arrière afin de ménager une ouverture à l'arrière de la caisse et permettre son déchargement et éventuellement son chargement.

Il existe plusieurs solutions permettant de faciliter le déchargement par l'arrière d'une caisse pour véhicule industriel, lorsque la porte arrière est ouverte. De manière non exhaustive, parmi ces solutions techniques on trouve la mise en oeuvre d'un fond mouvant ou d'un bouclier poussoir mobile, qui est monté à l'intérieur de la caisse et qui est actionnable par au moins un vérin, afin de pousser le chargement vers l'arrière de la caisse. La caisse peut également être montée basculante vers le haut et vers l'arrière et être actionnable par un ou plusieurs vérins de levage, afin de permettre le bennage vers l'arrière de son chargement. Éventuellement la caisse peut également être équipée d'une bâche déroulable qui est interposée entre le fond de la caisse et le chargement et qui facilite en se déroulant le glissement vers l'arrière du chargement lors du bennage.

Un type connu de porte arrière pour caisse de véhicule industriel comporte un ou deux vantaux articulés en rotation autour d'un axe vertical, et verrouillable en position de fermeture par exemple au moyen d'une crémone.

Ces portes arrière présentent l'inconvénient d'occuper un espace important latéralement lorsqu'on les ouvre en les faisant pivoter autour de leur axe vertical.

On a déjà proposé dans les modèles d'utilité chinois CN203186182U et CN206202452U et dans la demande de brevet japonais JP H08 28132 A de réaliser un vantail dont la cinématique d'ouverture/fermeture combine une rotation du vantail autour d'un axe vertical et une translation longitudinale avant/arrière du vantail. La rotation d'un angle de 90° du vantail depuis sa position de fermeture permet d'orienter le vantail parallèlement à un plan longitudinal vertical de la caisse. La translation du vantail vers l'avant de la caisse permet de déplacer le vantail de manière à le ranger le long de la face externe de l'une des parois latérales de la caisse.

Cette cinématique d'ouverture/fermeture divulguée dans les modèles d'utilité chinois CN203186182U et CN206202452U et dans la demande de brevet japonais JP H08 28132 A permet de résoudre l'inconvénient susvisé en réduisant l'encombrement latéral de la porte lors de son ouverture ou de sa fermeture.

Les solutions techniques décrites dans ces publications présentent toutefois l'inconvénient majeur de nécessiter une action manuelle fastidieuse et pénible pour ouvrir ou fermer la porte arrière.

Au surplus, avec ce type de solution technique, lorsque le conducteur du véhicule transportant une caisse doit décharger par l'arrière le chargement contenu dans la caisse ou au contraire doit charger par l'arrière la caisse, il doit dans un premier temps manoeuvrer le véhicule industriel de manière à positionner la paroi arrière de la caisse à proximité du point de déchargement ou chargement, par exemple un quai de chargement /déchargement ou une zone de bennage, en laissant un espace suffisant à l'arrière de la caisse pour qu'il puisse accéder et ouvrir manuellement à la porte arrière. Dans un deuxième temps, le conducteur doit ouvrir manuellement la porte arrière de la caisse en la faisant pivoter de 90° et en la repoussant à la main en direction de l'avant de la caisse. Cette opération d'ouverture est fastidieuse et peut présenter des risques pour le conducteur. Ensuite dans un troisième temps le conducteur doit remonter dans le véhicule industriel et doit de nouveau manoeuvrer le véhicule en le reculant suffisamment pour positionner correctement l'arrière de la caisse.

### Objectif de l'invention

La présente invention vise à proposer une nouvelle de solution de porte arrière de caisse pour véhicule industriel qui pallie au moins les inconvénients susvisés des solutions techniques de l'art antérieur.

### Résumé de l'invention

L'invention a ainsi pour objet une caisse pour véhicule industriel à porte arrière automatique présentant les caractéristiques techniques suivantes.

La caisse de véhicule industriel comporte une porte arrière comprenant au moins un premier vantail, qui est articulé en rotation autour d'un premier axe vertical et qui comporte une position opérationnelle, dans laquelle ledit premier vantail peut pivoter en rotation entre une position de fermeture de la caisse et une position ouverte dans laquelle il est orienté parallèlement à un plan longitudinal vertical (X,Z) de la caisse ; ledit premier vantail est mobile en translation vers l'avant de la caisse depuis ladite position opérationnelle et dans sa position ouverte jusqu'à une position rétractée dans laquelle il est rangé à l'extérieur de la caisse et le long d'une première face latérale de la caisse, et réciproquement en translation vers l'arrière de la caisse depuis ladite position rétractée jusque ladite position opérationnelle ; ladite caisse est équipée d'un système d'ouverture automatique et de fermeture automatique de ladite porte arrière, qui comporte un premier actionneur adapté pour actionner le premier vantail en rotation entre ladite position de fermeture de la caisse et ladite position ouverte lorsque le premier vantail est dans ladite position opérationnelle, et un deuxième actionneur adapté pour déplacer le premier vantail en position ouverte, entre ladite position opérationnelle et ladite position rétractée.

Plus particulièrement, la caisse de l'invention peut comporter les caractéristiques additionnelles et optionnelles suivantes, chaque caractéristique additionnelle et optionnelle pouvant être combinée avec l'une quelconque des autres caractéristiques techniques de la caisse :
- Le système d'ouverture automatique et de fermeture automatique de ladite porte arrière comporte au moins un premier chariot, qui est monté à l'extérieur de la caisse sur la première face latérale de la caisse ; ledit premier vantail est solidaire du premier chariot en étant articulé en rotation autour du premier axe vertical par rapport au chariot ; ledit premier chariot est mobile en translation vers l'avant de la caisse et permet d'entraîner le premier vantail depuis ladite position opérationnelle jusqu'à ladite position rétractée, et réciproquement est mobile en translation vers l'arrière de la caisse et permet d'entraîner le premier vantail depuis ladite position rétractée jusque ladite position opérationnelle ; le premier actionneur est porté par le premier chariot et est adapté pour actionner le premier vantail en rotation par rapport au premier chariot entre ladite position de fermeture de la caisse et ladite position ouverte lorsque le premier vantail est dans ladite position opérationnelle ; le deuxième actionneur est fixé à la caisse et est adapté pour déplacer en translation vers l'avant le premier chariot et le premier vantail en position ouverte, entre ladite position opérationnelle et ladite position rétractée, et réciproquement vers l'arrière entre ladite position rétractée et ladite position opérationnelle.
- La porte arrière comprend un deuxième vantail qui est articulé en rotation autour d'un deuxième axe vertical et qui comporte une position opérationnelle dans laquelle ledit deuxième vantail peut pivoter en rotation entre une position de fermeture de la caisse et une position ouverte dans laquelle il est orienté parallèlement à un plan longitudinal vertical de la caisse, ledit deuxième vantail étant mobile en translation vers l'avant de la caisse depuis ladite position opérationnelle et dans sa position ouverte jusqu'à une position rétractée dans laquelle il est rangé à l'extérieur de la caisse et le long d'une deuxième face latérale de la caisse, et réciproquement en translation vers l'arrière de la caisse depuis ladite position rétractée jusque ladite position opérationnelle ; le système d'ouverture automatique et de fermeture automatique de ladite porte arrière comporte un troisième actionneur adapté pour actionner le deuxième vantail en rotation entre ladite position de fermeture de la caisse et ladite position ouverte lorsque le deuxième vantail est dans ladite position opérationnelle, et un quatrième actionneur adapté pour déplacer le deuxième vantail en position ouverte, entre ladite position opérationnelle et ladite position rétractée.
- Le système d'ouverture automatique et de fermeture automatique de ladite porte arrière comporte un deuxième chariot qui est monté à l'extérieur de la caisse sur la deuxième face latérale de la caisse ; le deuxième vantail est solidaire du deuxième chariot en étant articulé en rotation autour du deuxième axe vertical par rapport au deuxième chariot ; le deuxième chariot est mobile en translation vers l'avant de la caisse et permet d'entraîner le deuxième vantail depuis ladite position opérationnelle jusqu'à ladite position rétractée, et réciproquement est mobile en translation vers l'arrière de la caisse et permet d'entraîner le deuxième vantail depuis ladite position rétractée jusque ladite position opérationnelle ; le troisième actionneur est porté par le deuxième chariot et est adapté pour actionner le deuxième vantail en rotation par rapport au deuxième chariot entre ladite position de fermeture de la caisse et ladite position ouverte lorsque le deuxième vantail est dans ladite position opérationnelle ; le quatrième actionneur est fixé à la caisse et est adapté pour déplacer en translation vers l'avant le deuxième chariot et le deuxième vantail en position ouverte, entre ladite position opérationnelle et ladite position rétractée, et réciproquement vers l'arrière entre ladite position rétractée et ladite position opérationnelle.
- Le premier chariot est monté coulissant dans deux glissières longitudinales fixes, qui sont espacées verticalement, et le cas échéant le deuxième chariot est monté coulissant dans deux autres glissières longitudinales fixes, qui sont espacées verticalement.
- Lesdites glissières associées au premier chariot sont fixées à la première face latérale (face externe) de la caisse.
- Lesdites glissières associées au deuxième chariot sont fixées à la deuxième face latérale (face externe) de la caisse.
- Le premier chariot, et de préférence chaque chariot, comporte des galets de roulement positionnés dans lesdites glissières.
- De préférence, le premier vantail est articulé en rotation autour d'un unique premier axe de rotation vertical (R) qui est positionné à l'extérieur de la caisse.
- De préférence le deuxième vantail est articulé en rotation autour d'un unique deuxième axe de rotation vertical (R) qui est positionné à l'extérieur de la caisse.
- De préférence, le premier axe de rotation vertical (R) est positionné par rapport au premier chariot de telle sorte que le premier axe de rotation vertical (R) du premier vantail est positionné longitudinalement à l'arrière de la caisse au-delà de la première face latérale de la caisse lorsque le premier chariot est amené dans ladite position opérationnelle du premier vantail.
- De préférence, le deuxième axe de rotation vertical (R) est positionné longitudinalement par rapport au deuxième chariot de telle sorte que le deuxième axe de rotation vertical (R) du deuxième vantail est positionné longitudinalement à l'arrière de la caisse au-delà de la deuxième face latérale de la caisse lorsque le deuxième chariot est amené dans ladite position opérationnelle du deuxième vantail.
- De préférence, le premier vantail est articulé en rotation par rapport au premier chariot au moyen de plusieurs charnières, qui sont fixées au premier chariot et au premier vantail, et de préférence à la face externe du premier vantail, et qui permettent une articulation en rotation du premier vantail par rapport au premier chariot autour dudit premier axe de rotation (R) vertical,
- De préférence le deuxième vantail est articulé en rotation par rapport au deuxième chariot au moyen de plusieurs charnières, qui sont fixées au deuxième chariot et au deuxième vantail, et de préférence à la face externe du deuxième vantail, et qui permettent une articulation en rotation du deuxième vantail par rapport au deuxième chariot autour dudit deuxième axe de rotation (R) vertical.
- Chaque chariot comporte une plaque verticale apte à coulisser en translation de l'arrière vers l'avant de la caisse entre une position arrière et une position avant et réciproquement.
- Lesdites charnières sont fixées dans la région du bord arrière de ladite plaque, et de préférence sont fixées à la face externe de ladite plaque.
- Chaque charnière comporte une première platine et une deuxième platine qui sont articulées en rotation l'une par rapport à l'autre au moyen d'un gond (ou broche), la première platine étant fixée au chariot et de préférence à la face externe de la plaque du chariot et l'autre platine étant fixée au vantail, et de préférence à la face externe du vantail.
- Le premier actionneur est positionné sous la caisse ; le cas échéant le troisième actionneur est positionné sous la caisse.
- Le premier actionneur est de préférence configuré pour actionner le premier vantail en rotation en le poussant depuis ladite position de fermeture vers ladite position ouverte et en le tirant depuis ladite position ouverte vers ladite position de fermeture.
- Le deuxième actionneur est de préférence configuré pour déplacer le premier vantail en position ouverte, et le cas échéant pour déplacer le premier chariot, en le poussant depuis ladite position rétractée vers ladite position opérationnelle et en le tirant depuis ladite position opérationnelle vers ladite position rétractée.
- Le troisième actionneur est de préférence configuré pour actionner le deuxième vantail en rotation en le poussant depuis ladite position de fermeture vers ladite position ouverte et en le tirant depuis ladite position ouverte vers ladite position de fermeture.
- Le quatrième actionneur est de préférence configuré pour déplacer le deuxième vantail en position ouverte, et le cas échéant pour déplacer le deuxième chariot, en le poussant depuis ladite position rétractée vers ladite position opérationnelle et en le tirant depuis ladite position opérationnelle vers ladite position rétractée.
- Le premier actionneur comprend un vérin, de préférence un vérin double effet, et le cas échéant le troisième actionneur comprend un vérin, de préférence un vérin double effet.
- Le deuxième actionneur est positionné sous la caisse, et le cas échéant le quatrième actionneur est positionné sous la caisse.
- Le deuxième actionneur comprend une vis à billes et le cas échéant le quatrième actionneur comprend une vis à billes.
- Ledit au moins premier vantail ou chaque vantail, une fois rangé en position rétractée, est entièrement positionné le long de la face latérale de la caisse, sans dépasser à l'arrière de la caisse.
- La caisse comporte deux rives longitudinales supérieures et ledit au moins un vantail en position rétractée ou chaque vantail en position rétractée est positionné sous l'une des rives longitudinales supérieures en étant entièrement surplombé par ladite rive longitudinale supérieure.
- Ledit premier chariot ou chaque chariot est positionné sous l'une des rives longitudinales supérieures en étant entièrement surplombé par ladite rive longitudinale supérieure.
- Le système d'ouverture automatique et de fermeture automatique de ladite porte arrière comporte une interface de commande, qui permet à un utilisateur de déclencher une séquence d'ouverture de la porte arrière et de déclencher une séquence de fermeture de la porte arrière, et une unité de commande qui est adaptée pour commander le premier actionneur et le deuxième actionneur ou le cas échéant le premier actionneur, le deuxième actionneur, le troisième actionneur et le quatrième actionneur, de manière à exécuter automatiquement la séquence d'ouverture de la porte arrière ou la séquence de fermeture de la porte arrière déclenchée par l'utilisateur.
- L'unité de commande est adaptée pour exécuter automatiquement la séquence d'ouverture de la porte arrière en commandant le premier actionneur ou en commandant le premier actionneur et le troisième actionneur, de manière à faire pivoter le premier vantail ou chaque vantail dans sa position ouverte, puis en commandant le deuxième actionneur ou en commandant le deuxième actionneur et le quatrième actionneur de manière à déplacer vers l'avant de la caisse le premier vantail ou chaque vantail dans sa position rétractée.
- L'unité de commande est adaptée pour exécuter automatiquement la séquence de fermeture de la porte arrière en commandant le deuxième actionneur ou en commandant le deuxième actionneur et le quatrième actionneur, de manière à déplacer vers l'arrière de la caisse le premier vantail ou chaque vantail en position ouverte et jusqu'à sa position opérationnelle par rapport à l'arrière de la caisse, puis en commandant le premier actionneur ou en commandant le premier actionneur et le troisième actionneur, de manière à faire pivoter le premier vantail ou chaque vantail dans sa position de fermeture de la caisse.
- La porte arrière est équipée d'un système de verrouillage/déverrouillage du premier vantail ou des deux vantaux, qui est commandé par l'unité de commande.
- Le système de verrouillage/déverrouillage est de préférence positionné à l'extérieur du premier vantail ou des deux vantaux.
- L'unité de commande est adaptée pour, une fois le premier vantail ou chaque vantail amené dans sa position de fermeture de la caisse, commander le système de verrouillage/déverrouillage de manière à verrouiller le premier vantail ou chaque vantail, puis pour commander le deuxième actionneur ou pour commander le deuxième actionneur et le quatrième actionneur, de manière à mettre en compression les joints de porte de la caisse au moyen du premier vantail ou des deux vantaux.

L'invention a également pour objet un véhicule industriel comportant un châssis porteur sur lequel est montée une caisse équipée d'un système d'ouverture automatique et de fermeture automatique de la porte arrière de la caisse tel que défini précédemment.

### Description des figures

Les caractéristiques et avantages de l'invention apparaîtront plus clairement à la lecture de la description détaillée ci-après, qui est donnée à titre d'exemple non limitatif et non exhaustif, et en référence aux dessins annexés sur lesquels :
- La figure 1 est une vue isométrique en perspective d'un exemple de véhicule industriel, de type semi-remorque, qui est conforme à une variante particulière de réalisation de l'invention et dans lequel la porte arrière comporte deux vantaux pivotants qui sont fermés.
- La figure 2 est une vue partielle de l'arrière du véhicule de la figure 1 montrant le dessous de la caisse.
- La figure 3 est une vue partielle de l'arrière du véhicule de la figure 1 qui montre le dessous de la caisse, le vantail gauche de la porte arrière étant en position ouverte.
- La figure 4 est une vue partielle de l'arrière du véhicule de la figure 1 qui montre le dessous de la caisse, le vantail gauche de la porte arrière étant rangé en position rétractée sur le côté gauche de la caisse.
- La figure 5 est une vue de côté de l'arrière du véhicule de la figure 4.
- La figure 6 est une vue en coupe transversale du véhicule de la figure 5 dans le plan de coupe VI-VI.
- La figure 7 est un agrandissement d'une partie de la figure 6.
- La figure 8 est un synoptique des principaux éléments constitutifs d'un système d'ouverture automatique et de fermeture automatique de la porte arrière de la caisse.

### Description détaillée

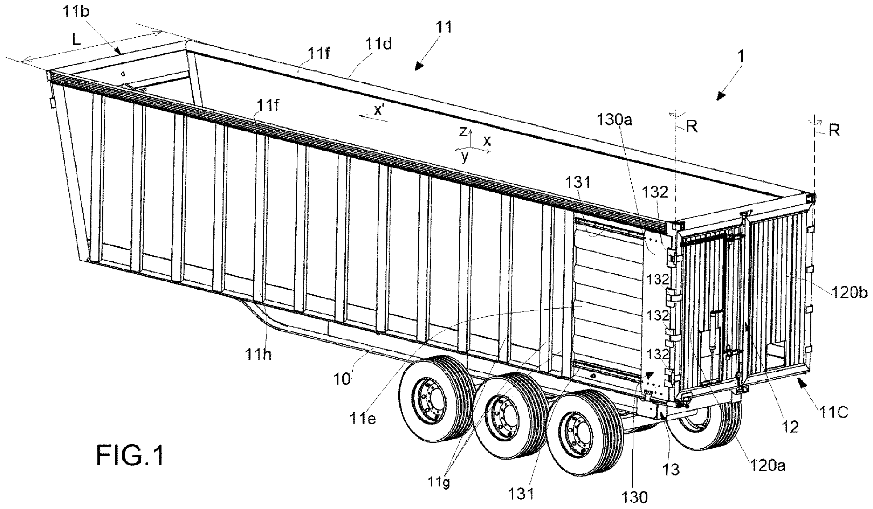

On a représenté sur la figure 1 un exemple de véhicule industriel 1, sous la forme d'une semi-remorque, comportant un châssis porteur roulant 10, sur lequel est montée une caisse 11, qui est adaptée pour être déchargée par l'arrière.

Sur les figures annexées, l'axe X représente la direction longitudinale, orientée de l'avant vers l'arrière, de la caisse 11. L'axe X' représente la direction longitudinale, orientée de l'arrière vers l'avant de la caisse 11. L'axe Y représente la direction transversale, orientée de la droite vers la gauche, de la caisse 11. L'axe Z, qui est perpendiculaire aux axes X et Y, représente la direction verticale, orientée du bas vers le haut, de la caisse 11. Le plan (Y,Z) définit un plan transversal vertical de la caisse 11 et le plan (X,Z) définit un plan longitudinal vertical de la caisse 11.

La caisse peut, indifféremment selon l'invention, être non-amovible ou être amovible par rapport au châssis porteur roulant 10, de manière à pouvoir être déposée sur le sol.

Le châssis porteur roulant 10 de la semi-remorque 1 est, de manière connue en soi, apte à être attelé à l'avant à un véhicule tracteur (non représenté) au moyen d'un dispositif d'attelage. Lorsque la semi-remorque est attelée au véhicule tracteur, le châssis porteur roulant 10 de la semi-remorque repose à l'arrière sur un ou plusieurs essieux et à l'avant sur le véhicule tracteur par l'intermédiaire dudit système d'attelage, de sorte que le véhicule tracteur supporte une partie du poids de la semi-remorque et de son chargement.

L'invention n'est pas limitée à un véhicule industriel de type semi-remorque. Dans une autre variante de l'invention, le véhicule industriel peut également être un camion-porteur ou une remorque comportant une caisse posée sur un châssis porteur roulant.

Dans l'exemple illustré sur les figures, la caisse 11 est de type benne ouverte sur le dessus pour son chargement gravitaire avec tout type de produits ou matériaux, et plus particulièrement dans cet exemple, mais non exclusivement, des produits ou matériaux en vrac tels que par exemple, et de manière non exhaustive, des matières agricoles en vrac (céréales, betteraves, pommes de terre ...), des matériaux de terrassement ou déchets en vrac (terre, sable, gravas...).

L'invention n'est pas limitée à une caisse de type benne ouverte sur le dessus, mais dans une autre variante de l'invention, la caisse 11 peut être un caisson fermé de type conteneur, adapté pour être chargé et déchargé par l'arrière.

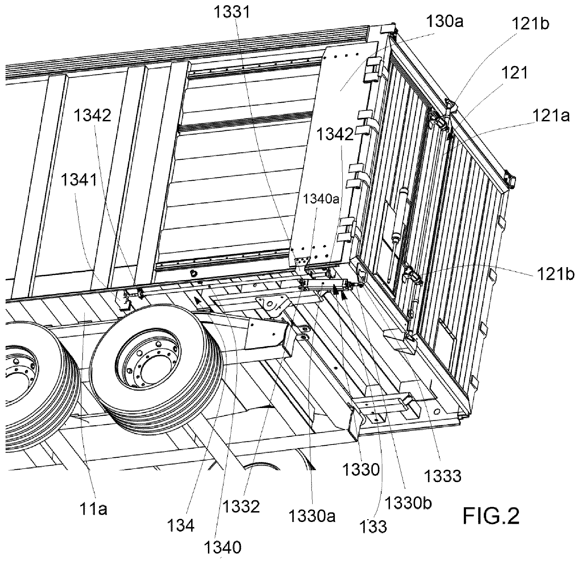

Dans l'exemple particulier des figures annexées, cette caisse 11 est de forme parallélépipédique et comporte (Fig.2) un fond 11a, (Fig.1) une paroi avant 11b, une paroi arrière 11c, et deux parois latérales 11d et 11e formant les deux faces latérales de la caisse 11. Le fond 11a et les parois 11b, 11c, 11d, 11e délimitent un volume interne de chargement de la caisse 11.

De manière usuelle et optionnelle selon l'invention, le bord supérieur de chaque paroi latérale 11d, 11e de la caisse 11 forme ou est pourvu d'une rive supérieure longitudinale 11f, qui déborde légèrement vers l'extérieur de la caisse 11 par rapport à la face externe de la paroi latérale 11d, 11e. La distance L (Fig.1) entre ces deux rives 11f, mesurée dans la direction transversale Y, définit la largeur maximale de la caisse 11 et correspond à l'encombrement transversal maximum de la caisse 11.

De manière usuelle et optionnelle selon l'invention, chaque paroi latérale 11d, 11e est en outre renforcée au moyen de raidisseurs verticaux 11g externes (Fig.1), qui sont espacés dans la direction longitudinale (axe X) de la caisse 11 et qui sont de préférence entièrement surplombés par les rives longitudinales supérieures 11f.

L'invention n'est pas limitée à une caisse de forme parallélépipédique, mais peut s'appliquer à toute géométrie de caisse et notamment peut s'appliquer à une caisse de type benne demi-ronde. La caisse peut par exemple être une benne poussoir demi-ronde adaptée notamment au transport de produits bitumeux.

Afin de permettre le déchargement de la caisse 11 par l'arrière, la paroi arrière 11c de la caisse 11 comporte une porte arrière 12, qui comprend, dans cet exemple particulier, deux vantaux 120a et 120b. Chaque vantail 120a, 120b est articulé en rotation autour d'un axe vertical R.

Dans une autre variante de l'invention, la porte arrière de la caisse peut comporter un unique vantail de plus grande dimension articulé en rotation autour d'un axe vertical.

La caisse 11 est équipée d'un système 13 d'ouverture automatique et de fermeture automatique de ladite porte arrière 12, qui est spécifique de l'invention et dont une variante particulière de réalisation sera décrite ultérieurement.

De manière optionnelle selon l'invention, la porte arrière 12 comporte (Fig.2) un système de verrouillage/déverrouillage 121 en rotation des deux vantaux 120a, 120b. Ce système de verrouillage/déverrouillage 121 comporte plus particulièrement une crémone 121a rotative et actionnable en rotation au moyen de deux vérins 121b, de manière à pouvoir verrouiller en rotation les deux vantaux 120a et 120b dans leur position de fermeture de la caisse 11 (Fig. 1 et Fig.2) et à pouvoir déverrouiller en rotation les deux vantaux 120a et 120b.

Dans une autre variante de réalisation moins sophistiquée, le verrouillage en rotation des vantaux 120a, 120b dans leur position de fermeture, ainsi que leur déverrouillage en rotation, peuvent être effectués au moyen d'une crémone ou équivalent actionnable à la main ou de tout autre système.

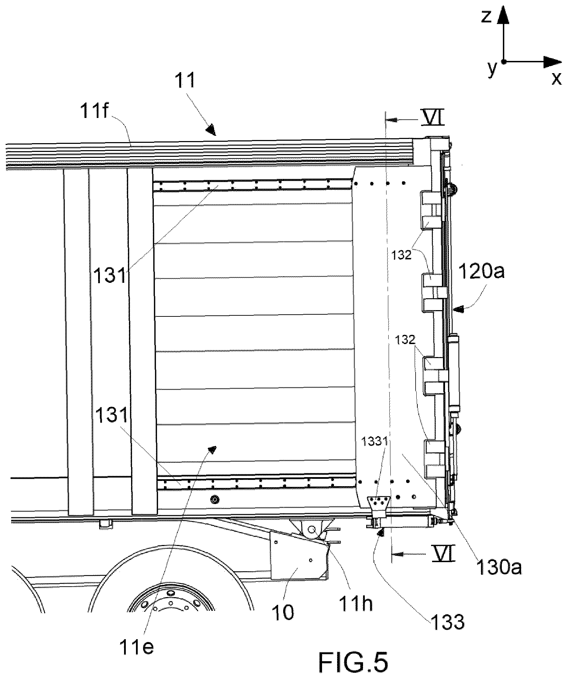

En référence à la figure 5, la caisse 11 est articulée en rotation par rapport au châssis 10, autour d'un axe de rotation transversal 11h, qui est positionné à l'arrière du châssis 10 et est orienté transversalement au plan longitudinal vertical (X,Z). De manière connue en soi, la semi-remorque 1 est également équipée d'un ou plusieurs vérins de levage hydrauliques (non visibles sur les figures) qui sont de manière usuelle montés entre le châssis 10 et l'avant de la caisse 11 et qui permettent de faire basculer la caisse 11 vers le haut et vers l'arrière autour de cet axe 11h, afin de décharger par gravité la caisse 11 par l'arrière une fois que la porte arrière 12 de la caisse a été ouverte (opération dite de bennage).

La caisse 11 peut également, et de manière optionnelle, être équipée d'une bâche déroulable qui est interposée entre le fond 11a de la caisse 11 et le chargement et qui facilite en se déroulant le glissement vers l'arrière du chargement lors d'une opération de bennage.

Dans une autre variante de réalisation de l'invention, la caisse 11 peut ne pas être basculante, mais peut être montée en position fixe sur le châssis porteur roulant 10. Dans ce cas, mais non nécessairement, la caisse est de préférence équipée de moyens additionnels permettant de faciliter son déchargement par l'arrière, tels que par exemple, et de manière connue et non exhaustive, la mise en oeuvre d'un fond mouvant ou d'un bouclier poussoir mobile, qui est monté à l'intérieur de la caisse et qui est actionnable par au moins un vérin, afin de pousser le chargement vers l'arrière de la caisse.

### Système 13 d'ouverture automatique et de fermeture automatique de la porte arrière 12

Dans la variante particulière des figures 1 à 8, pour chaque vantail 120a,120b, le système 13 d'ouverture automatique et de fermeture automatique de la porte arrière 12 comporte un chariot 130 externe coulissant, qui est monté sur la face externe de l'une des parois latérales de la caisse 11, à savoir la paroi latérale 11e pour le vantail 120a et la paroi latérale 11d pour le vantail 120b.

Sur les figures, seul le premier chariot 130 associé au vantail 120a est visible, sachant que le deuxième chariot 130 associé à l'autre vantail 120b et monté sur la face externe de l'autre paroi latérale 11d est identique à ce premier chariot 130.

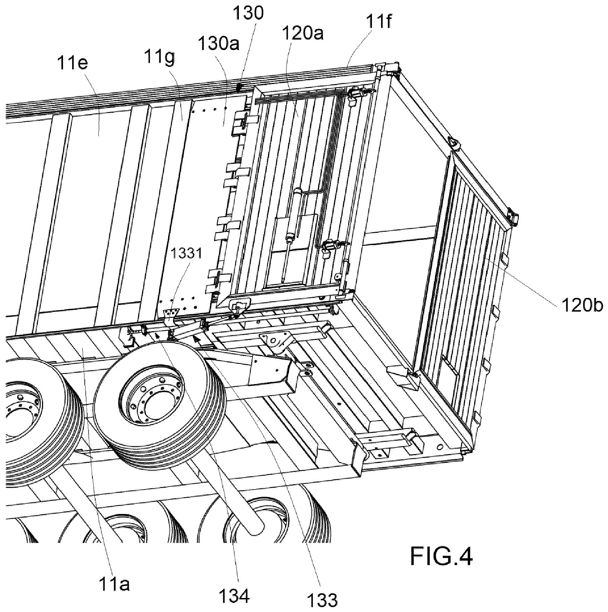

Chaque chariot 130 coulissant est monté sur la paroi latérale 11e (11d) en étant mobile et guidé en translation dans la direction longitudinale X avant/ arrière de la caisse 11 et dans la direction longitudinale X' arrière/ avant de la caisse 11 entre deux positions extrêmes : une position « arrière », illustrée sur les figures 1 à 3 et 5, et une position « avant », illustrée sur la figure 4.

Plus particulièrement, en référence aux figures 1 et 5 à 7, chaque chariot 130 comporte une plaque 130a verticale rigide, de faible épaisseur, par exemple une tôle en acier, qui est mobile et guidée en translation entre ladite position avant et ladite position arrière, au moyen de deux glissières 131 longitudinales externes (Fig.1), qui sont de préférence rectilignes et fixées à la paroi latérale 11e (11d) en étant espacées verticalement l'une de l'autre.

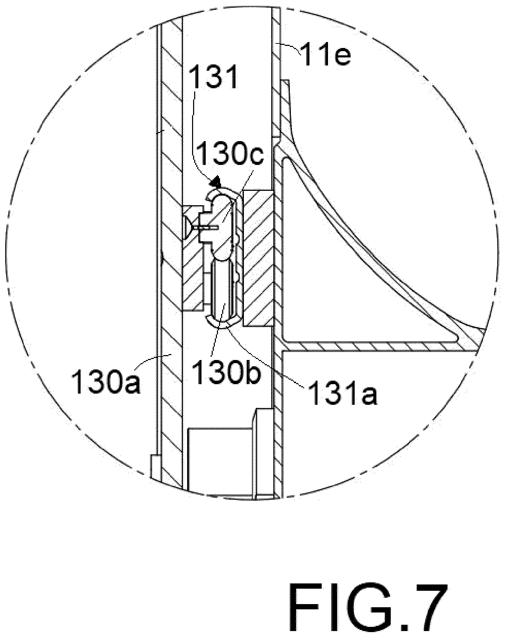

Cette plaque 130a est pourvue, pour chaque glissière 131, de plusieurs galets de roulement 130b (Fig.7), qui sont alignés et espacés dans la direction longitudinale (X) de la caisse 11 et qui sont montés dans la glissière 131.

Dans l'exemple de la figure 7, chaque glissière 131 comporte plus particulièrement un profilé 131a métallique en forme de C, qui forme un chemin de roulement pour les galets 130b. Chaque galet de roulement 130b est en outre associé à un patin supérieur 130c, qui est fixé à la plaque 130a, et qui est positionné dans le profilé 131a, au-dessus et au contact du galet de roulement130b en étant contact glissant avec le profilé 131a. Ce patin 130c permet de maintenir verticalement le galet de roulement 130b dans le profilé 131a et d'éviter un dégondage de la plaque 130a.

En référence à la figure 1, chaque vantail 120a (120b) est fixé la plaque 130a, au niveau du bord arrière vertical de la plaque 131a, au moyen de charnières 132, qui permettent une articulation en rotation de chaque vantail 120a (120b), par rapport à la plaque 130a, autour de l'axe de rotation R vertical.

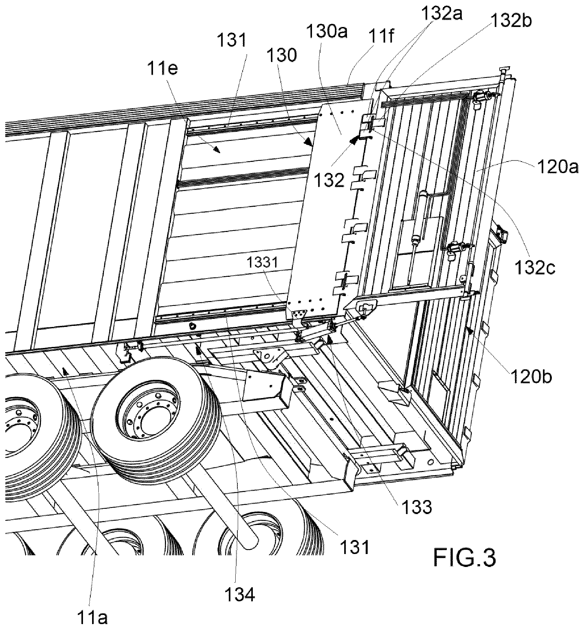

Chaque charnière 132 (Fig.3) comporte une première platine 132a et une deuxième platine 132b pourvues de charnons et articulées en rotation l'une par rapport à l'autre au moyen d'un gond 132c (ou broche). La première platine 132a est fixée au chariot 130 et de préférence à la face externe de la plaque 130a du chariot et l'autre platine 132b est fixée au vantail 120a (ou 120b), et de préférence à la face externe du vantail.

Chaque vantail 120a, 120b comporte une position dite « opérationnelle », dans laquelle la plaque mobile 130a est dans sa position extrême arrière de la figure 1 ou 3, et dans laquelle chaque vantail 120a,120b, une fois déverrouillé, peut pivoter de 90° entre :
- une position dite de « fermeture » de la caisse 11, qui est illustrée les figures 1 et 2 et dans laquelle le vantail 120a (120b) est orienté parallèlement au plan transversal vertical (Y, Z) de la caisse 11, et
- une position dite « ouverte », qui est illustrée sur la figure 3, et dans laquelle le vantail 120a (120b) est orienté parallèlement au plan longitudinal vertical (X, Z) de la caisse 11 [autrement dit perpendiculairement au plan transversal vertical (Y, Z) de la caisse 11] et est sensiblement dans l'alignement de la face externe de la paroi latérale 11e (dans l'alignement de la face externe de la paroi latérale 11d pour le vantail 120b).

Lorsque le premier chariot est amené dans sa position arrière de la figure 3, l'axe de rotation vertical R du vantail est positionné longitudinalement à l'arrière de la caisse au-delà de la première face latérale 11e (11d) de la caisse de manière à permettre ledit pivotement de 90° du vantail entre sa position opérationnelle ouverte (Fig.3) et sa position opérationnelle de fermeture (Fig.2) de la caisse.

En référence à la figure 2, le système 13 d'ouverture automatique et de fermeture automatique de la porte arrière 12 comporte, pour chaque vantail 120a, 120b, un actionneur 133 qui d'une manière générale a pour fonction, lorsque le vantail est dans ladite position opérationnelle et est déverrouillé en rotation, de faire pivoter le vantail 120a (120b) autour son axe vertical R entre ladite position de fermeture de la caisse illustrée sur la figure 1 ou 2 et ladite position ouverte de la figure 3.

Dans la variante particulière de réalisation des figures 1 à 3, cet actionneur 133 comporte un vérin 1330, qui peut être un vérin double effet de type pneumatique ou hydraulique ou un vérin électrique.

Ce vérin 1330 est de préférence positionné sous la caisse 11.

Le corps 1330a de ce vérin 1330 est fixé à la partie basse de la plaque 130a, au moyen d'une pièce de liaison rigide 1331, en étant articulé en rotation (articulation 1332) autour d'un axe de rotation vertical par rapport à cette pièce de liaison 1331. L'extrémité distale de la tige mobile 1330b de ce vérin 1330 est fixée à la partie basse du vantail 120a (120b), en étant articulée en rotation (articulation 1333) autour d'un axe de rotation vertical par rapport au vantail 120a (120b).

Lorsque le vantail 120a est dans sa position ouverte de la figure 3, la tige 1330b du vérin 1330 est dans sa position sortie finale. Pour faire pivoter le vantail 120a dans sa position de fermeture de la figure 2, il suffit de commander le vérin 1330 de manière à rentrer la tige 1330b jusqu'à une position rentrée finale, la tige 1330b tirant sur le vantail 120a et permettant ainsi de le faire pivoter dans sa position de fermeture. Inversement, lorsque le vantail 120a est dans sa position de fermeture de la figure 2, pour faire pivoter le vantail 120a jusque dans sa position d'ouverte de la figure 3, il suffit de commander le vérin 1330 de manière à sortir la tige 1330b et à l'amener dans sa position sortie finale, la tige 1330b poussant le vantail 120a et permettant ainsi de le faire pivoter dans sa position ouverte de la figure 3.

Le vérin 1330 peut avoir un positionnement différent de celui des figures 1 à 3 et peut être remplacé par tout actionneur équivalent remplissant la même fonction.

En référence à la figure 2, le système 13 d'ouverture automatique et de fermeture automatique de la porte arrière 12 comporte, pour chaque plaque 130a, un deuxième actionneur 134 qui permet :
- lorsque la plaque 130a est dans sa position arrière et que le vantail 120a (120b) est dans sa position ouverte (Fig.3), d'entraîner en translation, vers l'avant (direction X') de la caisse 11, la plaque 130a, le vantail 120a (120b) fixé à cette plaque et l'actionneur 133, jusqu'à une position du vantail dite « rétractée », dans laquelle la plaque 130a est dans sa position avant et le vantail 120a (120b) est rangé à l'extérieur et le long d'un côté de la caisse 11, c'est-à-dire est rangé dans l'exemple particulier de la figure 4 le long de la face externe de la paroi latérale 11e pour le vantail 120a (de la paroi latérale 11d pour le vantail 120b).
- lorsque la plaque 130a est dans sa position avant et que le vantail 120a (120b) est dans sa position rétractée de la figure 4, d'entraîner en translation, vers l'arrière (direction X) de la caisse 11, la plaque 130a, le vantail 120a (120b) fixé à cette plaque et l'actionneur 133, jusqu'à amener la plaque 130a dans sa position arrière de la figure 3, le vantail 120a ( 120b) étant en position ouverte.

Dans l'exemple particulier de la figure 2, et de manière non limitative de l'invention, cet actionneur 134 comporte une vis à billes 1340, qui est positionnée sous le fond 11a de la caisse 11 et un moteur 1341 électrique permettant d'entraîner en rotation la vis à billes 1340 dans les deux sens de rotation. Cette vis à billes 1340 est montée rotative sur deux paliers 1342 avant et arrière, fixés sous le fond 11a, et l'écrou 1340a de la vis à billes 1340 est fixé à la plaque 130a du chariot mobile 130, par l'intermédiaire de la pièce de liaison 1331 susvisée. La rotation dans un sens ou dans l'autre de la vis à billes 1340 permet, par l'intermédiaire de l'écrou 1340a, de pousser la plaque 130a vers l'arrière de la caisse 11 et réciproquement de tirer la plaque 130a vers l'avant de la caisse 11. Les deux positions extrêmes arrière (Fig.2) et avant (Fig.4) de la plaque 130a peuvent être détectées au moyen de capteurs de fin de course ou au moyen d'une temporisation.

Dans une autre variante, la vis à billes 1340 peut avoir un positionnement différent, et peut par exemple être positionnée dans un logement longitudinal de la paroi latérale 11e (11d) de la caisse.

Dans une autre variante, la vis à billes 1340 peut être remplacée par tout autre type d'actionneur remplissant la même fonction, c'est-à-dire permettant de déplacer longitudinalement le vantail 120a (120b) depuis sa position opérationnelle et ouverte de la figure 3 jusque dans sa position rétractée de la figure 4 et réciproquement. Par exemple, et de manière non exhaustive, le deuxième actionneur 134 peut par exemple comporter un système d'entraînement en translation de type pignon/chaîne ou de type roue dentée/crémaillère ou de type vérin.

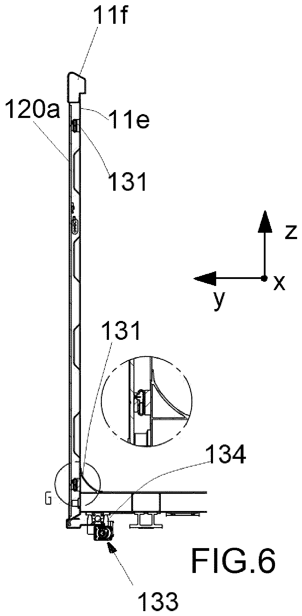

Lorsque le vantail 120a (120b) est en position rétractée (Fig.4), le vantail 120a (120b) et la plaque 130a sont positionnés sur le côté de la caisse 11 sous l'une 11f (Fig.6) des rives longitudinales supérieures en étant de préférence entièrement surplombés par ladite rive 11f. Ainsi, de manière avantageuse, le vantail 120a (120b) et la plaque 130a ne dépassent pas latéralement de la rive 11f et n'augmentent donc pas l'encombrement latéral de la caisse 11. En outre, lors de leur cinématique d'ouverture et lors de leur cinématique de fermeture, les vantaux 120a, 120b ne sortent jamais latéralement de ce volume maximum de la caisse 11.

Au surplus, dans la position rétractée de la figure 4, le vantail 120a (120b) et la plaque 130a sont de préférence positionnés entièrement sur le côté de la caisse sans dépasser à l'arrière de la caisse 11, ce qui réduit avantageusement l'encombrement à l'arrière de la caisse 11 ouverte, notamment lors des opérations de déchargement.

### Fonctionnement du système 13 d'ouverture automatique et de fermeture automatique de la porte arrière 12

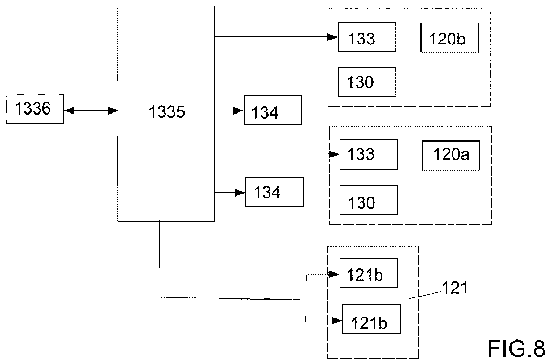

En référence à la figure 8, le système 13 d'ouverture automatique et de fermeture automatique de la porte arrière 12 comporte une unité de commande 1335, par exemple sous la forme d'un automate programmable, qui est programmée pour réaliser automatiquement les étapes successives d'une séquence d'ouverture automatique de la porte arrière 12 et les étapes successives d'une séquence de fermeture automatique de la porte arrière 12.

Cette unité de commande 1335 peut être positionnée dans un boîtier de protection fixé à la caisse 11 ou peut être installée dans la cabine de conduite du véhicule industriel, c'est-à-dire par exemple dans la cabine du véhicule tracteur de la semi-remorque 1.

La séquence d'ouverture automatique et la séquence de fermeture automatique peuvent être déclenchées manuellement ou vocalement par un opérateur, en pratique le conducteur du véhicule, au moyen d'une interface de commande 1336 adaptée.

Cette interface de commande 1336 peut de préférence être positionnée à l'intérieur de la cabine de conduite du véhicule industriel, de manière à permettre au conducteur de ce véhicule de déclencher une séquence d'ouverture automatique ou une séquence de fermeture automatique de la porte arrière 12 depuis cette cabine, sans devoir sortir du véhicule.

Cette interface de commande 1336 peut par exemple être un simple bouton de commande à au moins deux positions (fermeture/ouverture). Dans une variante plus sophistiquée, cette interface de commande 1336 peut comporter un écran tactile permettant au conducteur du véhicule de sélectionner dans un menu affiché sur cet écran, une commande d'ouverture ou une commande de fermeture.

Dans une autre variante, le conducteur peut être équipé d'un dispositif portable, de type téléphone portable ou tablette, communiquant avec l'unité de commande 1335, et permettant au conducteur du véhicule de déclencher à distance une séquence d'ouverture automatique ou une séquence de fermeture automatique de la porte arrière 12.

### Exemple de séquence d'ouverture automatique

On suppose que les deux vantaux 120a, 120b de la porte arrière 12 sont dans leur position de fermeture de la caisse 11 et sont verrouillés en rotation (Figures 1 et 2).

Lorsque l'unité de commande 1335 reçoit une commande d'ouverture, elle exécute automatiquement les étapes successives suivantes (O1) à (O3) :
(O1) L'unité de commande 1335 commande le déverrouillage en rotation des deux vantaux 120a, 120b au moyen des vérins 121b et de la crémone 121a. En variante ce déverrouillage pourrait être effectué manuellement avant de déclencher la séquence d'ouverture.
(O2) L'unité de commande 1335 commande les actionneurs 133 de manière à faire pivoter le vantail 120a dans sa position ouverte (Fig.3) et symétriquement à faire pivoter le vantail 120b dans sa position ouverte, chaque vantail 120a, 120b en position ouverte étant orienté parallèlement au plan longitudinal vertical (X,Z) de la caisse 11 et étant sensiblement dans l'alignement de la face externe de la paroi latérale correspondante 11e ou 11d ; les actionneurs 133 peuvent être commandés de manière séquentielle ou en parallèle.
(O3) L'unité de commande 1335 commande l'actionneur 134 associé au vantail 120a, de manière à faire coulisser vers l'avant (direction X) l'ensemble chariot coulissant 130/vantail 120a/actionneur 133, jusqu'à ce que le vantail 120a soit dans sa position rétractée illustrée sur la figure 4 et commande également de manière similaire l'actionneur 134 associé à l'autre vantail 120b, de manière à faire coulisser vers l'avant l'autre ensemble chariot coulissant 130/vantail 120b/actionneur 133 jusqu'à ce que le vantail 120b soit dans sa position rétractée. Ces deux commandes peuvent être effectuées séquentiellement ou en parallèle.

La position rétractée finale de chaque vantail 120a, 120b peut de manière usuelle être détectée au moyen de capteurs fin de course (Fig.8) associés à chaque actionneur 134 ou dans une autre variante au moyen d'une temporisation.

Une fois ouverte, la caisse 11 peut être déchargée par l'arrière et éventuellement peut le cas échéant également être chargée par l'arrière.

### Exemple de séquence de fermeture automatique

On suppose que les deux vantaux 120a, 120b de la porte arrière 12 sont dans leur position rétractée le long de la caisse 11 (Figures 4).

Lorsque l'unité de commande 1335 reçoit une commande de fermeture, elle exécute automatiquement les étapes successives suivantes (F1) à (F3) :
(F1) L'unité de commande 1335 commande l'actionneur 134 associé au vantail 120a, de manière à faire coulisser vers l'arrière (direction X') l'ensemble chariot coulissant 130/vantail 120a/actionneur 133 dans la position opérationnelle à l'arrière de la caisse 11 qui est illustrée sur la figure 3, et commande également de manière similaire l'actionneur 134 associé à l'autre vantail 120b, de manière à faire coulisser vers l'arrière l'autre ensemble chariot coulissant 130/ vantail 120b/ actionneur 133 dans la position opérationnelle à l'arrière de la caisse 11. Ces deux commandes peuvent être effectuées séquentiellement ou en parallèle. La position opérationnelle à l'arrière de la caisse 11 de chaque vantail 120a, 120b peut de manière usuelle être détectée au moyen de capteurs fin de course associés à chaque actionneur 134 ou dans une autre variante au moyen d'une temporisation.
(F2) L'unité de commande 1335 commande les actionneurs 133 (de manière à faire pivoter chaque vantail 120a, 120b dans sa position de fermeture de la caisse 11 (Fig.1 et Fig.2) ; les actionneurs 133 peuvent être commandés de manière séquentielle ou en parallèle.
(F3) L'unité de commande 1335 commande le verrouillage en rotation des deux vantaux 120a, 120b au moyen des vérins 121b et de la crémone 121a. En variante ce verrouillage pourrait être effectué manuellement.

Dans une variante particulière de réalisation, la séquence de fermeture peut éventuellement comporter une étape additionnelle, entre les deux étapes (F2) et (F3) susvisées, consistant à commander les actionneurs 134, afin de mettre en compression les joints de porte de la caisse 11 au moyen des deux vantaux 120a et 120b.

## Revendications

1. Caisse (11) de véhicule industriel comportant une porte arrière (12) comprenant au moins un premier vantail (120a), qui est articulé en rotation autour d'un premier axe vertical (R) et qui comporte une position opérationnelle dans laquelle ledit premier vantail (120a) peut pivoter en rotation entre une position de fermeture de la caisse (11) et une position ouverte dans laquelle il est orienté parallèlement à un plan longitudinal vertical (X,Z) de la caisse (11), ledit premier vantail (120a) étant mobile en translation vers l'avant de la caisse depuis ladite position opérationnelle et dans sa position ouverte jusqu'à une position rétractée dans laquelle il est rangé à l'extérieur de la caisse (11) et le long d'une première face latérale (11e) de la caisse (11), et réciproquement en translation vers l'arrière de la caisse depuis ladite position rétractée jusque ladite position opérationnelle, ladite caisse étant équipée d'un système (13) d'ouverture automatique et de fermeture automatique de ladite porte arrière (12), qui comporte un premier actionneur (133) adapté pour actionner le premier vantail (120a) en rotation entre ladite position de fermeture de la caisse et ladite position ouverte lorsque le premier vantail est dans ladite position opérationnelle, et un deuxième actionneur (134) adapté pour déplacer le premier vantail en position ouverte, entre ladite position opérationnelle et ladite position rétractée.

2. Caisse de véhicule industriel selon la revendication 1, dans laquelle le système (13) d'ouverture automatique et de fermeture automatique de ladite porte arrière (12) comporte au moins un premier chariot (130), qui est monté à l'extérieur de la caisse sur la première face latérale (11e) de la caisse (11), dans laquelle ledit premier vantail (120a) est solidaire du premier chariot (130) en étant articulé en rotation autour du premier axe vertical (R) par rapport au chariot (130), dans laquelle ledit premier chariot (130) est mobile en translation vers l'avant de la caisse (11) et permet d'entraîner le premier vantail (120a) depuis ladite position opérationnelle jusqu'à ladite position rétractée, et réciproquement est mobile en translation vers l'arrière de la caisse et permet d'entraîner le premier vantail (120a) depuis ladite position rétractée jusque ladite position opérationnelle, dans laquelle le premier actionneur (133) est porté par le premier chariot (130) et est adapté pour actionner le premier vantail (120a) en rotation par rapport au premier chariot (130) entre ladite position de fermeture de la caisse (11) et ladite position ouverte lorsque le premier vantail (120a) est dans ladite position opérationnelle, et dans laquelle le deuxième actionneur (134) est fixé à la caisse (11) et est adapté pour déplacer en translation vers l'avant le premier chariot (130) et le premier vantail (120a) en position ouverte, entre ladite position opérationnelle et ladite position rétractée, et réciproquement vers l'arrière entre ladite position rétractée et ladite position opérationnelle.

3. Caisse de véhicule industriel selon la revendication 1, dans laquelle la porte arrière (12) comprend un deuxième vantail (120b) qui est articulé en rotation autour d'un deuxième axe vertical (R) et qui comporte une position opérationnelle dans laquelle ledit deuxième vantail (120b) peut pivoter en rotation entre une position de fermeture de la caisse (11) et une position ouverte dans laquelle il est orienté parallèlement à un plan longitudinal vertical (X,Z) de la caisse (11), ledit deuxième vantail (120b) étant mobile en translation vers l'avant de la caisse depuis ladite position opérationnelle et dans sa position ouverte jusqu'à une position rétractée dans laquelle il est rangé à l'extérieur de la caisse (11) et le long d'une deuxième face latérale (11d) de la caisse (11), et réciproquement en translation vers l'arrière de la caisse depuis ladite position rétractée jusque ladite position opérationnelle, dans laquelle le système (13) d'ouverture automatique et de fermeture automatique de ladite porte arrière (12) comporte un troisième actionneur (133) adapté pour actionner le deuxième vantail (120b) en rotation entre ladite position de fermeture de la caisse et ladite position ouverte lorsque le deuxième vantail (120b) est dans ladite position opérationnelle, et un quatrième actionneur (134) adapté pour déplacer le deuxième vantail (120b) en position ouverte, entre ladite position opérationnelle et ladite position rétractée.

4. Caisse de véhicule industriel selon les revendications 2 et 3, dans laquelle le système (13) d'ouverture automatique et de fermeture automatique de ladite porte arrière (12) comporte un deuxième chariot (130) qui est monté à l'extérieur de la caisse sur la deuxième face latérale (11d) de la caisse (11), dans laquelle le deuxième vantail (120b) est solidaire du deuxième chariot (130) en étant articulé en rotation autour du deuxième axe vertical (R) par rapport au deuxième chariot (130), dans laquelle le deuxième chariot (130) est mobile en translation vers l'avant de la caisse (11) et permet d'entraîner le deuxième vantail (120b) depuis ladite position opérationnelle jusqu'à ladite position rétractée, et réciproquement est mobile en translation vers l'arrière de la caisse et permet d'entraîner le deuxième vantail (120b) depuis ladite position rétractée jusque ladite position opérationnelle, dans laquelle le troisième actionneur (133) est porté par le deuxième chariot (130) et est adapté pour actionner le deuxième vantail (120a; 120b) en rotation par rapport au deuxième chariot (130) entre ladite position de fermeture de la caisse (11) et ladite position ouverte lorsque le deuxième vantail (120b) est dans ladite position opérationnelle, et dans laquelle le quatrième actionneur (134) est fixé à la caisse (11) et est adapté pour déplacer en translation vers l'avant le deuxième chariot (130) et le deuxième vantail (120a ; 120b) en position ouverte, entre ladite position opérationnelle et ladite position rétractée, et réciproquement vers l'arrière entre ladite position rétractée et ladite position opérationnelle.

5. Caisse de véhicule industriel selon l'une quelconque des revendications 2 ou 4, dans laquelle le premier chariot (130) est monté coulissant dans deux glissières (131) longitudinales fixes qui sont espacées verticalement, et dans laquelle le cas échéant le deuxième chariot (130) est monté coulissant dans deux autres glissières (131) longitudinales fixes qui sont espacées verticalement.

6. Caisse de véhicule industriel selon la revendication 5, dans laquelle chaque chariot (130) comporte des galets de roulement (130b) positionnés dans les glissières (131).

7. Caisse de véhicule industriel selon l'une quelconque des revendication 2, 4, 5, 6, dans laquelle le premier vantail (120a) est articulé en rotation par rapport au premier chariot (130) au moyen de plusieurs charnières (132), qui sont fixées au premier chariot(130) et au premier vantail (120a), de préférence à la face externe du premier vantail (120a), et qui permettent une articulation en rotation du premier vantail par rapport au premier chariot autour dudit premier axe de rotation (R) vertical, et de préférence dans laquelle le cas échéant le deuxième vantail (120b) est articulé en rotation par rapport au deuxième chariot (130) au moyen de plusieurs charnières (132), qui sont fixées au deuxième chariot (130) et au deuxième vantail (120b), de préférence à la face externe du deuxième vantail, et qui permettent une articulation en rotation du deuxième vantail (120b) par rapport au deuxième chariot (130) autour dudit deuxième axe de rotation (R) vertical.

8. Caisse de véhicule industriel selon l'une quelconque des revendications 2, 4, 5, 6, 7, dans laquelle chaque chariot (130) comporte une plaque (130a) verticale apte à coulisser en translation de l'arrière vers l'avant de la caisse entre une position arrière et une position avant et réciproquement.

9. Caisse de véhicule industriel selon les revendications 7 et 8, dans laquelle les charnières (132) sont fixées dans la région du bord arrière de ladite plaque (130a), et de préférence sont fixées à la face externe de ladite plaque.

10. Caisse de véhicule industriel selon l'une quelconque des revendications 1 à 9, dans laquelle le premier actionneur (133) est positionné sous la caisse (11), et le cas échéant le troisième actionneur (133) est positionné sous la caisse (11) et/ou dans laquelle le premier actionneur (133) comprend un vérin (1330), de préférence un vérin double effet, et le cas échéant le troisième actionneur (133) comprend un vérin (1330), de préférence un vérin double effet et/ou dans laquelle le deuxième actionneur (134) est positionné sous la caisse (11), et le cas échéant le quatrième actionneur (134) est positionné sous la caisse (11) et/ou dans laquelle le deuxième actionneur (134) comprend une vis à billes (1340) et le cas échéant le quatrième actionneur (134) comprend une vis à billes (1340).

11. Caisse de véhicule industriel selon l'une quelconque des revendications 1 à 10, dans laquelle ledit au moins premier vantail (120a) ou chaque vantail (120a ; 120b), une fois rangé en position rétractée, est entièrement positionné le long de la face latérale (11e ; 11d) de la caisse (11), sans dépasser à l'arrière de la caisse (11).

12. Caisse de véhicule industriel selon l'une quelconque des revendications 1 à 11, dans laquelle la caisse (11) comporte deux rives longitudinales supérieures (11f) et dans laquelle ledit au moins premier vantail (120a) en position rétractée ou chaque vantail (120a ; 120b) en position rétractée est positionné sous l'une des rives longitudinales supérieures (11f) en étant entièrement surplombé par ladite rive longitudinale supérieure (11f).

13. Caisse de véhicule industriel selon la revendication 12 et l'une quelconque des revendications 2, 4, 5, 6, 7, 8, 9, dans laquelle ledit premier chariot (130) ou chaque chariot (130) est positionné sous l'une des rives longitudinales supérieures (11f) en étant entièrement surplombé par ladite rive longitudinale supérieure (11f).

14. Caisse de véhicule industriel selon l'une quelconque des revendications 1 à 13, dans laquelle le système (13) d'ouverture automatique et de fermeture automatique de ladite porte arrière (12) comporte une interface de commande (1336), qui permet à un utilisateur de déclencher une séquence d'ouverture de la porte arrière et de déclencher une séquence de fermeture de la porte arrière, et une unité de commande (1335) qui est adaptée pour commander le premier actionneur (133) et le deuxième actionneur (134) ou le cas échéant le premier actionneur (133), le deuxième actionneur (134), le troisième actionneur (133) et le quatrième actionneur (134), de manière à exécuter automatiquement la séquence d'ouverture de la porte arrière ou la séquence de fermeture de la porte arrière déclenchée par l'utilisateur.

15. Caisse de véhicule industriel selon la revendication 14, dans laquelle la porte arrière (12) est équipée d'un système de verrouillage/déverrouillage (121) du premier vantail (120a) ou des deux vantaux (120a; 120b), qui est commandé par l'unité de commande (1335).

16. Véhicule industriel (1) comportant un châssis porteur (10) sur lequel est montée une caisse (11) équipée d'un système (13) d'ouverture automatique et de fermeture automatique de la porte arrière (12) de la caisse (11) selon l'une quelconque des revendications précédentes.
